# EUROPÄISCHE PATENTANMELDUNG

(11) **EP 3 078 808 A1**
(43) Veröffentlichungstag der Anmeldung: **12.10.2016**
(21) Anmeldenummer: 15162534.0
(22) Anmeldetag: 07.04.2015
(51) Int. Cl.: F01D 5/22

(54) **LAUFSCHAUFELREIHE FÜR EINE STRÖMUNGSMASCHINE**

(71) Anmelder: Siemens Aktiengesellschaft, 80333 München (DE)
(72) Erfinder: Kayser, Andreas, 42283 Wuppertal (DE)

(57) **Zusammenfassung**

Eine Laufschaufelreihe (1) für eine Strömungsmaschine (100), umfassend eine erste Laufschaufel (2) mit einem ersten Laufschaufelfuß (18) und eine zweite Laufschaufel (4) mit einem zweiten Laufschaufelfuß (20), wobei der erste und der zweite Laufschaufelfuß (18, 20) durch einen Zwischenraum (26) beabstandet sind, wobei der Zwischenraum (26) einen verbreiterten Bereich (28) aufweist, in dem ein erstes Dämpfungselement (6, 8, 10, 12, 72, 78) und ein zweites Dämpfungselement (6, 8, 10, 12, 72, 78) angeordnet sind, soll eine noch höhere Lebensdauer aufweisen. Dazu sind das erste und das zweite Dämpfungselement (6, 8, 10, 12, 72, 78) für eine unterschiedliche Dämpfungsfrequenz ausgelegt.

## Beschreibung

Die Erfindung betrifft eine Laufschaufelreihe für eine Strömungsmaschine, umfassend eine erste Laufschaufel mit einem ersten Laufschaufelfuß und eine zweite Laufschaufel mit einem zweiten Laufschaufelfuß, wobei der erste und der zweite Laufschaufelfuß durch einen Zwischenraum beabstandet sind, wobei der Zwischenraum einen verbreiterten Bereich aufweist, in dem ein erstes Dämpfungselement und ein zweites Dämpfungselement angeordnet sind.

Eine Strömungsmaschine oder Turbomaschine ist eine Fluidenergiemaschine, bei der die Energieübertragung zwischen Fluid und Maschine in einem offenen Raum durch eine Strömung nach den Gesetzen der Fluiddynamik über den Umweg der kinetischen Energie erfolgt. Die Energieübertragung erfolgt normalerweise mittels sternförmig angeordneten Rotorblättern, Flügeln oder Schaufeln, die derart profiliert sind, dass durch die Umströmung eine Druckdifferenz zwischen Vorder- und Rückseite entsteht (Tragflächenprofil).

Die Rotorblätter, Flügel oder Schaufeln sind Bestandteil des rotierenden Läufers oder Rotors der Strömungsmaschine und werden daher auch als Laufschaufeln bezeichnet. Sie bestehen aus dem eigentlichen Schaufelblatt, welches das erwähnte Tragflächenprofil aufweist, und einem Schaufelfuß. Der Schaufelfuß umfasst insbesondere bei Gas- und Dampfturbinen einen Befestigungsbereich, der in der Regel eine Tannenbaumnut zur Befestigung der Laufschaufel an der Rotornabe aufweist, und eine Plattform, die zwischen Schaufelblatt und Befestigungsbereich angeordnet ist und die Rotornabe gegen den Heißgaskanal abdichtet.

Derartige Laufschaufeln werden durch den Fluidstrom im Betrieb zu Schwingungen angeregt, die unter Umständen zu starken Vibrationen führen können und die Lebensdauer begrenzen.

Daher sind zwischen den Leitschaufelfüßen unterhalb der Plattform häufig Dämpfungselemente angeordnet, die gleichzeitig auch als Abdichtung dienen können. Der Zwischenraum zwischen den Leitschaufeln ist hierzu direkt unterhalb der Plattform keilartig verbreitert, um Platz für das Dämpfungselement zu schaffen. Die Dämpfungselemente minimieren die Vibrationsantwort der Laufschaufeln durch Reibung und mechanische Dämpfung. Zusätzlich werden sie häufig dazu genutzt, die Laufschaufeln der Laufschaufelreihe auf eine bestimmte Dämpfungsfrequenz im Betrieb abzustimmen.

Eine derartige Anordnung ist beispielsweise aus der EP 1 154 125 A2 bekannt. Hier wird auch offenbart, mehrere Dämpfungselemente in dem Zwischenraum anzuordnen, um unterschiedliche Phasenlagen einer Schwingung abzudämpfen.

Hiervon ausgehend ist es Aufgabe der Erfindung, eine Laufschaufelreihe der eingangs genannten Art anzugeben, deren Laufschaufeln eine noch höhere Lebensdauer aufweisen.

Diese Aufgabe wird erfindungsgemäß dadurch gelöst, dass das erste und das zweite Dämpfungselement für eine unterschiedliche Dämpfungsfrequenz ausgelegt sind.

Die Erfindung geht dabei von der Überlegung aus, dass eine höhere Lebensdauer durch eine noch konsequentere Vermeidung von Schaufelblattschwingungen erreicht werden könnte. Hierbei hat sich herausgestellt, dass die Vibrationsantwort einer Laufschaufel in der Regel mehrere Schwingungsmodenformen umfasst. Mit den bisher verfügbaren Dämpfungselementen konnte nur die Grundschwingungsmode durch entsprechendes Design und Konfiguration gedämpft werden. Höhere Moden konnten unabhängig davon nicht gedämpft werden. Um eine weitere unabhängige Abstimmmöglichkeit für weitere Schwingungsmoden zu schaffen, sollte daher das zweite unabhängige Dämpfungselement für eine unterschiedliche, vollkommen unabhängige Dämpfungsfrequenz ausgelegt werden.

In besonders vorteilhafter Ausgestaltung liegen die Dämpfungselemente im Betrieb der Strömungsmaschine jeweils linienartig an einer der beiden Laufschaufeln an. Mit anderen Worten: Jedes Dämpfungselement weist eine linienförmige Kontaktfläche mit einem der Laufschaufelfüße auf. Die Kombination eines mehrteiligen Dämpfers und dieser mehrfachen Linienkontakte ermöglicht eine besonders einfache Abstimmung der verschiedenen Dämpfungselemente auf die verschiedenen Frequenzen.

Eine derartige linienartige Kontaktfläche kann konstruktiv erreicht werden, indem die Dämpfungselemente jeweils eine zylindermantelförmig gekrümmte Oberfläche aufweisen. Da die Grenzflächen des Zwischenraums an den Laufschaufelfüßen in der Regel eben sind, ergibt sich durch die Auflage des zylindermantelförmigen Dämpfungselements auf der ebenen Fläche des Laufschaufelfußes ein Linienkontakt.

Eine Abstimmung der Dämpfungselemente auf verschiedene Frequenzen ist auf verschiedene Weisen möglich, die abhängig von der baulichen Situation, den Platzverhältnissen und der gewünschten Frequenzen ausgewählt werden können. In einer ersten vorteilhaften Ausgestaltung haben das erste und das zweite Dämpfungselement eine unterschiedliche Masse.

In einer zusätzlichen oder alternativen vorteilhaften Ausgestaltung bestehen das erste und das zweite Dämpfungselement aus einem unterschiedlichen Material. Hierbei können beispielsweise Materialen mit unterschiedlichen Elastizitätseigenschaften zur Abstimmung der Dämpfungsfrequenzen verwendet werden. Auch die Oberflächenbeschaffenheit hat Einfluss auf Frequenz und Dämpfung.

In weiterer zusätzlicher oder alternativer vorteilhafter Ausgestaltung liegen die Dämpfungselemente im Betrieb der Strömungsmaschine jeweils flächenartig an einer der beiden Laufschaufeln an und die Kontaktfläche des ersten Dämpfungselements und die Kontaktfläche des zweiten Dämpfungselements sind unterschiedlich, d. h. sie haben eine Fläche unterschiedlicher Größe. Auch durch die Größe der Kontaktfläche werden die Dämpfungseigenschaften beeinflusst.

Das jeweilige Dämpfungselement erstreckt sich in vorteilhafter Ausgestaltung der Laufschaufelreihe über die gesamte axiale Länge der Laufschaufelfüße. Der Begriff "axial" bezieht sich hierbei auf die Achse der Strömungsmaschine, d. h. die Rotationsachse der Laufschaufelreihe. Dies gilt auch im Folgenden, wenn die Begriffe axial, radial, azimutal o. ä. verwendet werden. Durch eine derartige Ausgestaltung ist zum einen eine Dämpfung über die gesamte axiale Länge gewährleistet, zum anderen wird dadurch eine stabile Positionierung der Dämpfungselemente gewährleistet.

In vorteilhafter Ausgestaltung ist der verbreiterte Bereich im Zwischenraum der Laufschaufelfüße derart dimensioniert, dass die Dämpfungselemente formschlüssig mit einem definierten Spiel in radialer und/oder azimutaler Richtung in ihrer Position gehalten werden. Durch die Rotation der Laufschaufel im Betrieb werden die Dämpfungselemente ohnehin in die radial äußerste Position getrieben. Durch ein definiertes Spiel werden der Einbau und die Positionierung der Dämpfungselemente bei der Montage vereinfacht.

Eine besonders vorteilhafte Möglichkeit, unterschiedliche Frequenzen abstimmen und dämpfen zu können, ist durch eine mechanische Entkopplung der Dämpfungselemente gegeben. Hierzu ist der verbreiterte Bereich vorteilhafterweise in radialer Richtung zweistufig ausgebildet und das erste und das zweite Dämpfungselement sind in unterschiedlichen Stufen angeordnet. Unterschiedliche Stufen des verbreiterten Bereiches können beispielsweise durch unterschiedliche Winkel der verbreiterten Seitenflächen erreicht werden oder aber durch einen ersten keilförmigen Bereich als erste Stufe, einen Zwischenbereich mit parallelen Seitenflächen und einen daran anschließenden sich weiter verbreiternden zweiten keilförmigen Bereich als zweite Stufe. In jeder der Stufen kann jedes Dämpfungselement separat ohne Kontakt zum anderen Dämpfungselement gelagert sein und dennoch beide Leitschaufelfüße kontaktieren.

Weitere Schwingungsmoden können abgedämpft werden, indem vorteilhafterweise in dem verbreiterten Bereich mehr als zwei Dämpfungselemente angeordnet sind, die im Betrieb der Strömungsmaschine jeweils linienartig an einer der beiden Laufschaufeln anliegen.

Hierbei liegen vorteilhafterweise alle bis auf eines der Dämpfungselemente an derselben Laufschaufel linienartig an. Mit anderen Worten: Lediglich eines der Dämpfungselemente liegt linienartig an der einen Laufschaufel an, während die anderen Dämpfungselemente an der anderen Laufschaufel linienartig anliegen. Dies ermöglicht eine besonders einfache Abstimmung der Dämpfungselemente auf unterschiedliche Schwingungsmoden und -frequenzen.

Um eine stabile Lagerung der Dämpfungselemente im Betrieb zu gewährleisten und ein verrutschen zu vermeiden, sind die Dämpfungselemente vorteilhafterweise durch Formschluss gegen ein Verschieben gegeneinander fixiert.

Dies kann in einer ersten vorteilhaften Ausgestaltung dadurch realisiert sein, dass das erste Dämpfungselement eine Vertiefung aufweist, in der eine Erhebung des zweiten Dämpfungselements angeordnet ist. Vertiefung und Erhebung sollten dabei so aneinander angeformt sein, dass ein stabiler Halt in jede Richtung entlang der Kontaktfläche gewährleistet ist.

In zusätzlicher oder alternativer vorteilhafter Ausgestaltung erstreckt sich das erste Dämpfungselement durch eine Öffnung des zweiten Dämpfungselements hindurch. Auch hierdurch wird ein Formschluss gewährleistet.

In weiterer vorteilhafter Ausgestaltung weist ein Dämpfungselement Punktkontakte an einer Kontaktfläche zu einem anderen Dämpfungselement oder zu einem Laufschaufelfuß auf. Derartige Punktkontakte können beispielsweise in Form von Kugelabschnittsflächen vorgesehen sein. Auch hierdurch ergeben sich weitere Möglichkeiten der Abstimmung auf unterschiedliche Dämpfungsmoden.

Die Laufschaufelreihe ist vorteilhafterweise radiärsymmetrisch ausgebildet. Unter Radiärsymmetrie wird hierbei eine Form der Symmetrie verstanden, bei der die Drehung eines Objektes (hier: der Leitschaufelreihe) um einen gewissen Winkel (hier: Winkelabstand zweier Leitschaufeln) um eine Gerade (hier: Achse der Strömungsmaschine) das Objekt wieder mit sich selbst zur Deckung bringt. Eine n-zählige Radiär- oder Drehsymmetrie liegt dabei vor, wenn eine Drehung um 360°/n das Objekt auf sich selbst abbildet. Dies bedeutet, dass insbesondere die Zwischenräume zwischen den Laufschaufelfüßen und die Anordnung der Dichtelemente in jedem Zwischenraum der Laufschaufelreihe identisch sind.

Eine Strömungsmaschine weist vorteilhafterweise eine beschriebene Laufschaufelreihe auf.

Dabei ist die Strömungsmaschine vorteilhafterweise als Gasturbine ausgelegt. Gerade in Gasturbinen treten die beschriebenen Vibrationen im Betrieb auf, die durch die beschriebene Abstimmung der Dämpfungselemente auf unterschiedliche Dämpfungsfrequenzen wirksam unterdrückt werden können.

Eine Kraftwerksanlage weist vorteilhafterweise eine derartige Strömungsmaschine auf.

Die mit der Erfindung erzielten Vorteile bestehen insbesondere darin, dass durch die Abstimmung der Dämpfungselemente auf unterschiedliche, unabhängige Dämpfungsfrequenzen eine deutlich höhere Lebensdauer von Laufschaufeln insbesondere von Gasturbinen erreicht wird. Das hier vorgeschlagene Design der Dämpfungselemente kann zudem auch mit bekannten Laufschaufeln verwendet werden.

Ausführungsbeispiele der Erfindung werden anhand von Zeichnungen näher erläutert. Darin zeigen:
- FIG 1: ein erstes Beispiel für eine Ausgestaltung und Anordnung der Dämpfungselemente in einer Laufschaufelreihe in aximutal-radialem Schnitt,
- FIG 2: das Beispiel aus FIG 1 in einem Längsschnitt,
- FIG 3: ein zweites Beispiel für eine Ausgestaltung und Anordnung der Dämpfungselemente in einer Laufschaufelreihe in aximutal-radialem Schnitt,
- FIG 4: das Beispiel aus FIG 3 in einem Längsschnitt,
- FIG 5: ein drittes Beispiel für eine Ausgestaltung und Anordnung der Dämpfungselemente in einer Laufschaufelreihe in aximutal-radialem Schnitt,
- FIG 6: ein viertes Beispiel für eine Ausgestaltung und Anordnung der Dämpfungselemente in einer Laufschaufelreihe in aximutal-radialem Schnitt,
- FIG 7: ein fünftes Beispiel für eine Ausgestaltung und Anordnung der Dämpfungselemente in einer Laufschaufelreihe in aximutal-radialem Schnitt,
- FIG 8: ein sechstes Beispiel für eine Ausgestaltung und Anordnung der Dämpfungselemente in einer Laufschaufelreihe in aximutal-radialem Schnitt,
- FIG 9: das Beispiel aus FIG 8 in einem Längsschnitt,
- FIG 10: das Beispiel aus FIG 8 und 9 in einer Aufsicht, und
- FIG 11: einen teilweisen Längsschnitt durch eine Gasturbine.

Gleiche Teile sind in allen Zeichnungen mit denselben Bezugszeichen versehen.

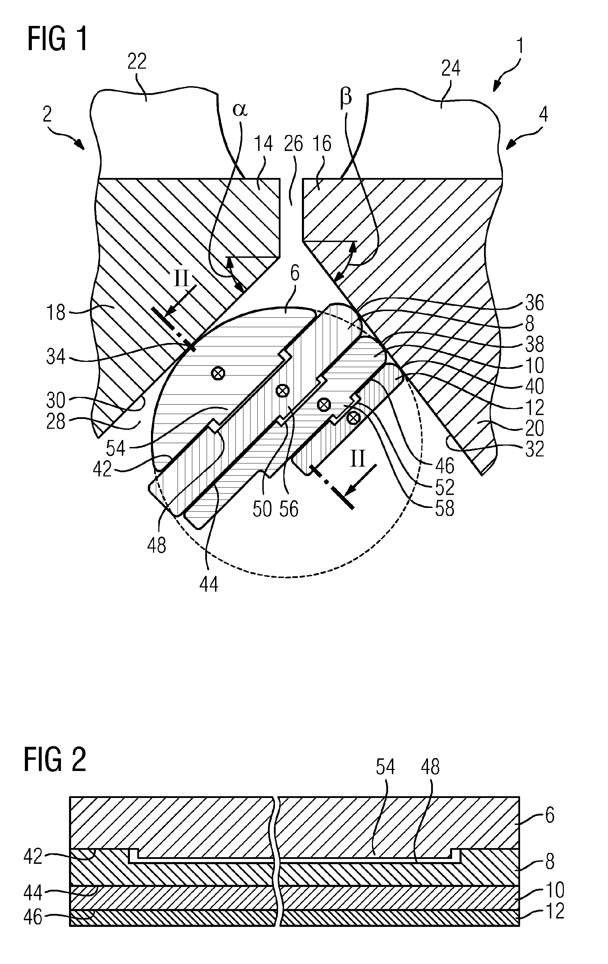

FIG 1 zeigt ein erstes Ausführungsbeispiel für eine Ausgestaltung einer Laufschaufelreihe 1 mit zwischen zwei Laufschaufeln 2, 4 angeordneten Dämpfungselementen 6, 8, 10, 12. Die FIG 1 zeigt einen Ausschnitt aus der Laufschaufelreihe 1 in einer Schnittebene senkrecht zur Rotorachse. Hierbei sind die Plattformen 14, 16 benachbarter Laufschaufeln 2, 4 zu erkennen, die Teil des jeweiligen Laufschaufelfußes 18, 20 sind, der jeweils auch einen Befestigungsbereich aufweist, an dem die Laufschaufeln 2, 4 - nicht dargestellt - mittels einer Tannenbaumnut-Feder-Verbindung am Rotorblatt eingehängt sind. Oberhalb der Plattformen 14, 16 schließen sich die Schaufelblätter 22, 24 an, die in FIG 1 nur teilweise dargestellt sind und auf deren Darstellung in den folgenden Zeichnungen verzichtet wird.

Die Laufschaufelfüße 18, 20 und Plattformen 14, 16 weisen einen kleinen Abstand zueinander auf, so dass zwischen ihnen ein Zwischenraum 26 gebildet wird. Unterhalb der Plattformen 14, 16 bildet der Zwischenraum 26 einen keilförmig verbreiterten Bereich 28. Die Unterseiten der beiden Plattformen 14, 16 bilden in diesem verbreiterten Bereich 28 Reibungsflächen 30, 32, gegen die die Dämpfungselemente 6, 8, 10 12 bei einer Rotation des Rotors durch die Zentrifugalkraft gedrückt werden. Die Reibungsflächen 30, 32 sind eben und in diesem Beispiel unter Winkeln α bzw. β von ca. 45° zu der Ebene, die durch die azimutale Richtung und die Rotorachse aufgespannt wird, geneigt. Der Abknickpunkt der Reibungsfläche 32 der rechten Laufschaufel 4 von ihrer Plattform 16 ist dabei radial ein geringes Stück weiter außen gelegen als der der linken Laufschaufel 2.

In diesem Beispiel wird ein Dämpfungselement 6 mit im Wesentlichen kreissegmentförmigem Querschnitt zusammen mit drei Dämpfungselementen 8, 10, 12 mit unterschiedlichen, im Wesentlichen rechteckigen Querschnitten eingesetzt. Alle Dämpfungselemente 6, 8, 10, 12 sind in axialer Richtung stabförmig mit im Wesentlichen gleichbleibendem Querschnitt ausgebildet und erstrecken sich über die gesamte axiale Länge der Laufschaufelreihe 1.

Die Kreissehne des Dämpfungselements 6 ist parallel zur linken Reibungsfläche 30 ausgerichtet, so dass das Dämpfungselement 6 in seinem Zenit 34 die Reibungsfläche 30 linienförmig kontaktiert. Die übrigen Dämpfungselemente 8, 10, 12 schließen sich schichtenartig an die Kreissehne an und weisen jeweils an ihrer der Reibungsfläche 32 zugewandten Seite ebenfalls einen kreissegmentförmigen Abschnitt 36, 38, 40 auf. Sie sind so ausgerichtet, dass alle übrigen Dämpfungselemente 8, 10, 12 an ihrem jeweiligen kreissegmentförmigen Abschnitt 36, 38, 40 an der Reibungsfläche 32 linienförmig anliegen.

Die Erstreckung jedes der rechteckförmigen Dämpfungselemente 8, 10, 12 parallel zur Kreissehne des kreissegmentförmigen Dämpfungselements 6 nimmt treppenartig ab. Die Kontaktfläche 42 zwischen Dämpfungselement 6 und Dämpfungselement 8 ist somit größer als die Kontaktfläche 44 zwischen Dämpfungselement 8 und 10, welche wiederum größer ist als die Kontaktfläche 46 zwischen Dämpfungselement 10 und 12. Weiterhin nimmt auch die Dicke der Dämpfungselemente 8, 10, 12 senkrecht zur Kreissehne des kreissegmentförmigen Dämpfungselements 6 ausgehend vom Dämpfungselement 6 ab. Entsprechend gilt dies auch für die Masse der Dämpfungselemente 6, 8, 10, 12: Die Masse des kreissegmentförmigen Dämpfungselements 6 ist am größten, die der darauf folgenden Dämpfungselemente 8, 10, 12 wird mit zunehmendem Abstand geringer. Durch die treppenartige Anordnung ändert sich auch die Definition der Schwerpunktlage.

In einem nicht gezeigten Ausführungsbeispiel sind die Dämpfungselemente 6, 8, 10, 12 auch noch aus unterschiedlichen Materialien gefertigt. Um ein Verrutschen der Dämpfungselemente 6, 8, 10, 12 gegeneinander zu verhindern, weisen die Dämpfungselemente 8, 10, 12 an der jeweiligen Kontaktfläche 42, 44, 46 rechteckige, sich nicht bis zum Rand der Dämpfungselemente 6, 8, 10, 12 erstreckende Vertiefungen 48, 50, 52 auf, und die Dämpfungselemente 6, 8, 10 an der jeweiligen Kontaktfläche 42, 44, 46 entsprechend angeformte rechteckige Erhebungen 54, 56, 58 auf. Hierdurch bildet sich eine Art Nut-Feder-Verbindung.

Die Form der Vertiefungen 48, 50, 52 und Erhebungen 54, 56, 58 ist am Beispiel der Vertiefung 48 und Erhebung 54 in FIG 2 gezeigt, die einen Längsschnitt durch die Dichtelemente 6, 8, 10, 12 entlang der Ebene II-II aus FIG 1 zeigt. Die Vertiefung 48 und Erhebung 54 erstrecken sich beiderseitig nicht über die gesamte axiale Länge der Dichtelemente 6, 8. Dies gilt für alle Vertiefungen 48, 50, 52 und Erhebungen 54, 56, 58. Damit ist auch ein Formschluss in axialer Richtung gewährleistet.

Bei einer Schwingung des Gesamtsystems erfolgt eine Relativbewegung zwischen den beiden benachbarten Laufschaufeln 2, 4, die wiederum zu einer Relativbewegung zwischen dem kreissegmentförmigen Dämpfungselement 6 und der Reibungsfläche 30, zwischen den Dämpfungselementen 8, 10, 12 und der Reibungsfläche 32 und zu einer Relativbewegung der Dämpfungselemente 6, 8, 10 12 untereinander an ihrer jeweiligen Kontaktfläche 46, 48, 50 führt. Insbesondere durch die linienförmige Kontaktierung zwischen Dämpfungselementen 6, 8, 10 12 und Reibungsflächen 30, 32 kann an allen Berührungs- bzw. Kontaktstellen somit Schwingungsenergie in Reibungsenergie umgewandelt werden, so dass eine effektive Schwingungsdämpfung erreicht wird.

Durch die Ausgestaltung der Dämpfungselemente 6, 8, 10, 12 mit verschiedenen Größen, Massen und Materialien sind diese zur Abdämpfung unterschiedlicher Frequenzen geeignet. Dies ermöglicht unterschiedliche Dämpfungsfrequenzen und damit die Abdämpfung völlig unabhängiger Schwingungsmoden.

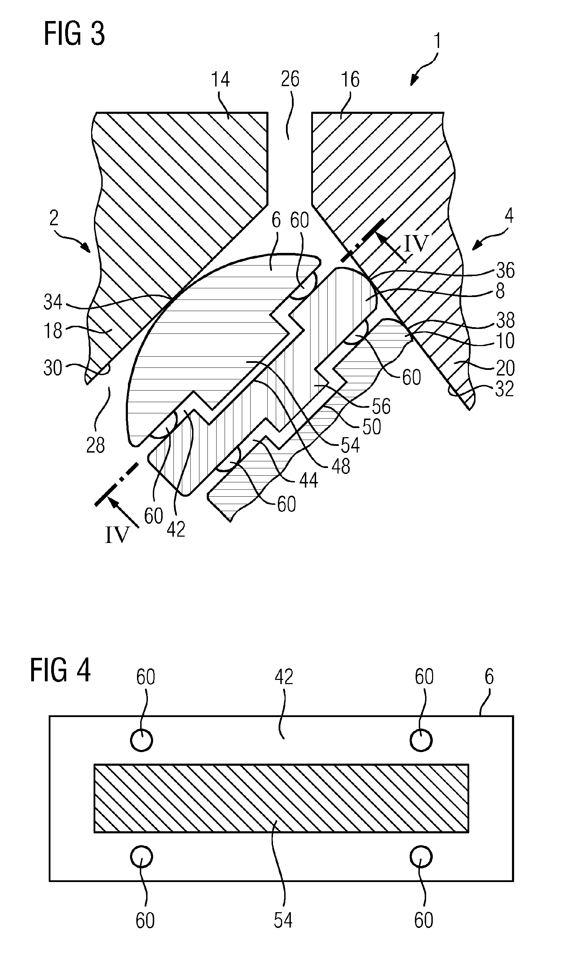

Ein leicht abgewandeltes Ausführungsbeispiel, das nur anhand seiner Unterschiede zum Ausführungsbeispiel der FIG 1 und 2 erläutert wird, ist ausschnittsweise in FIG 3 und 4 dargestellt. Im Ausführungsbeispiel der FIG 3 und 4 sind an den Kontaktflächen 46, 48 keine flächigen Kontaktierungen vorgesehen, sondern an der jeweils der Reibungsfläche 30 abgewandten Seite der Dämpfungselemente 6, 8, 10 sind Punktkontakte 60 vorgesehen. Diese bestehen aus einem flachen, kugelsegmentförmigen Teil und sind alle identisch ausgebildet. Die Punktkontakte 60 sind so flach, dass der Formschluss an Vertiefungen 52, 54 und Erhebungen 54, 56 noch gewährleistet bleibt.

Der Abknickpunkt der Reibungsfläche 32 der rechten Laufschaufel 4 von ihrer Plattform 16 ist dabei radial gleich hoch gelegen wie der der linken Laufschaufel 2.

FIG 4 zeigt einen Längsschnitt entlang der Ebene IV-IV in FIG 3. Wie anhand der FIG 3 und 4 erkennbar wird, sind pro Kontaktfläche 46, 48 vier Punktkontakte 60 regelmäßig verteilt, so dass eine stabile Auflage gewährleistet ist. Durch die Verwendung der Punktkontakte ist ebenfalls eine Anpassung der Dämpfungsfrequenz möglich.

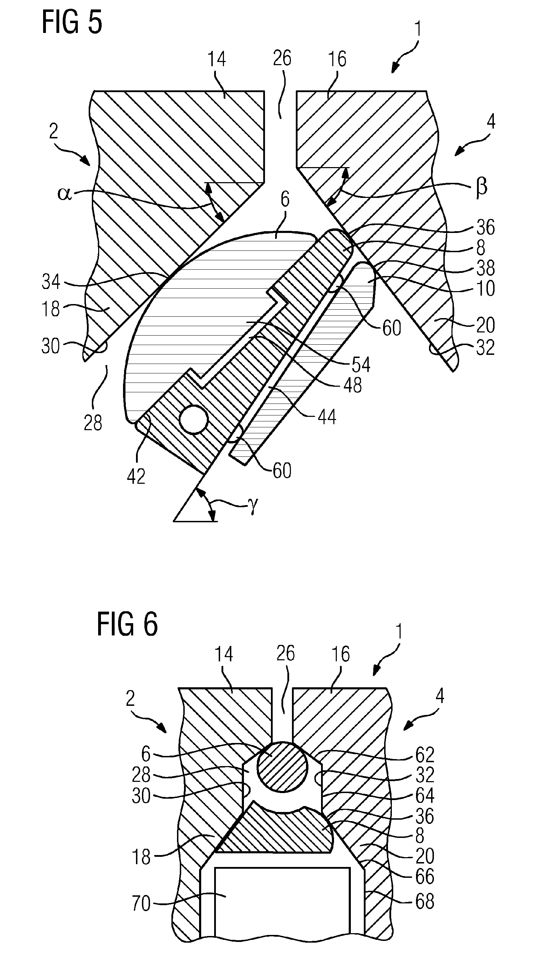

Ein weiteres, alternatives Ausführungsbeispiel ist in FIG 5 gezeigt, welches ebenfalls anhand der Unterschiede zum Ausführungsbeispiel der FIG 1 und 2 erläutert wird. Das Dämpfungselement 12 ist hier entfallen. Zwischen Dämpfungselement 8 und 10 sind die bereits anhand von FIG 3 und 4 erläuterten Punktkontakte 60 angeordnet, die Vertiefung 50 und die Erhebung 56 sind entfallen. Als wesentliches neues Merkmal ist die Kontaktfläche 44 zwischen den Dämpfungselementen 8 und 10 nicht parallel zur Reibungsfläche 30 angeordnet, sondern in einem Winkel γ zur radial-azimutalen Ebene. Die Dämpfungselemente 8, 10 sind hierfür entsprechend mit trapezförmigem Querschnitt ausgestaltet.

Der Abknickpunkt der Reibungsfläche 32 der rechten Laufschaufel 4 von ihrer Plattform 16 ist dabei radial ein geringes Stück weiter innen gelegen als der der linken Laufschaufel 2. Ein weiteres, alternatives Ausführungsbeispiel ist in FIG 6 gezeigt, welches wiederum anhand der Unterschiede zum Ausführungsbeispiel der FIG 1 und 2 erläutert wird. Der verbreiterte Bereich 28 ist hierbei zweistufig ausgeführt. In einer ersten Stufe 62 verbreitert sich der Bereich keilförmig und bildet die schon beschriebenen Reibungsflächen 30, 32. Es folgt in radial nach innen verlaufender Richtung ein paralleler Abschnitt 64, in dem die Reibungsflächen 30, 32 parallel zu einander verlaufen. Erst daran schließt sich eine zweite Stufe 66 an, in der die Reibungsflächen 30, 32 wieder keilförmig in radialer Richtung nach innen auseinander laufen. Es folgt in radial nach innen verlaufender Richtung ein weiterer paralleler Abschnitt 68, in dem die Reibungsflächen 30, 32 parallel zu einander verlaufen.

In der ersten Stufe 62 ist ein im Querschnitt kreisförmiges Dämpfungselement 6 angeordnet. Dieses liegt linienförmig an beiden Reibungsflächen 30, 32 an. Ein zweites Dämpfungselement 8, welches einen im Wesentlichen trapezförmigen Querschnitt aufweist, ist in der zweiten Stufe 66 angeordnet und liegt ebenfalls an den Reibungsflächen 30, 32 in ihrem abgeschrägten Bereich an. An der linken Reibungsfläche 30 liegt eine plane Kontaktfläche vor. An der rechten Reibungsfläche 32 liegt aufgrund eines kreissegmentförmigen Abschnitts 36 am Dämpfungselement 8 eine linienförmige Kontaktierung an der Reibungsfläche 32 vor.

Die Dämpfungselemente 6, 8 werden im Betrieb durch die Zentrifugalkraft in FIG 6 nach oben gedrückt und sie so dimensioniert, dass sie sich im Betrieb nicht berühren. Hierfür ist ein entsprechendes Spiel zwischen den Dämpfungselementen 6, 8 vorgesehen, so dass jedes Dämpfungselement entkoppelt vom anderen Dämpfungselement autark dämpfend auf die Laufschaufeln 2, 4 einwirken kann. Hierdurch können sie völlig unabhängig voneinander für unterschiedliche Frequenzen ausgelegt werden. Radial innerhalb des Dämpfungselements 8 ist ein Bauteil 70 im parallelen Abschnitt 68 angeordnet, welches eine ebene Oberfläche aufweist, die das Dämpfungselement 8 im Betrieb nicht berührt. Auch hier ist ein entsprechendes Spiel vorgesehen. Steht die Laufschaufelreihe 1 still, können sich die Dämpfungselemente 6, 8 zwar bewegen, werden jedoch in einer Position gehalten, die eine richtige Ausrichtung der Dämpfungselemente 6, 8 im Betrieb garantiert. Hierfür ist die dem Dämpfungselement 6 zugewandte Oberfläche des Dämpfungselements 8 konkav ausgestaltet. In einer nicht dargestellten Variante der FIG 6 sind Dämpfungselemente 6, 8 und Plattform 16 nicht parallel ausgerichtet.

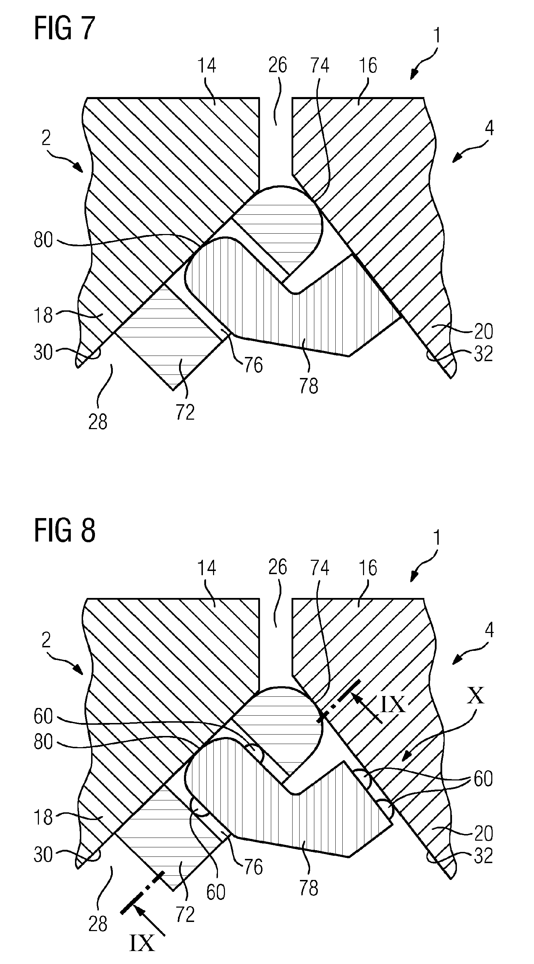

Ein weiteres alternatives Ausführungsbeispiel ist in FIG 7 gezeigt. Laufschaufeln 2, 4 sind hierbei identisch zum Ausführungsbeispiel der FIG 3 und 4 ausgebildet.

In FIG 7 ist ein erstes Dämpfungselement 72 gezeigt, dessen Querschnitt im Wesentlichen dem Dämpfungselement 8 aus FIG 1 entspricht. Es liegt mit seiner längeren Seite flächig an der Reibungsfläche 30 an. Mit seiner kürzeren Seite, die einen kreissegmentförmigen Abschnitt 74 aufweist, liegt es linienförmig an der Reibungsfläche 32 an. Durch das Dämpfungselement 72 erstreckt sich eine Öffnung 76 senkrecht zur Reibungsfläche 30.

Durch die Öffnung 76 erstreckt sich ein im Querschnitt bumerangförmiges Dämpfungselement 78. An der der Reibungsfläche 30 zugewandten Seite in der Öffnung 76 weist es einen kreissegmentförmigen Abschnitt 80 auf und liegt somit linienförmig an der Reibungsfläche 30 an. Die der Reibungsfläche 32 zugewandte Seite des Dämpfungselements 78 ist hingegen flach ausgestaltet, es ergibt sich eine flächige Kontaktierung zur Reibungsfläche 32.

Öffnung 76 und der durch die Öffnung 76 durchtretende Abschnitt des Dämpfungselements 78 erstrecken sich ähnlich wie die Vertiefungen 48, 50, 52 und die Erhebungen 54, 56, 58 nicht über die gesamte axiale Länge der Dämpfungselemente 72, 78. Auch können mehrere Öffnungen 76 und durch diese durchtretende Abschnitte des Dämpfungselement 78 entlang der axialen Länge der Dämpfungselemente 72, 78 vorgesehen sein, wie noch anhand von FIG 8 bis 10 erläutert wird.

Zunächst zeigt jedoch FIG 8 eine Abwandlung des Querschnitts des Ausführungsbeispiels aus FIG 7. An der Kontaktfläche zwischen Dämpfungselement 78 und Öffnung 76 im Dämpfungselement 72 sowie an der Kontaktfläche zwischen Dämpfungselement 78 und Reibungsfläche 32 sind die aus dem Ausführungsbeispiel gemäß FIG 3 und 4 bekannten Punktkontakte 60 angeordnet.

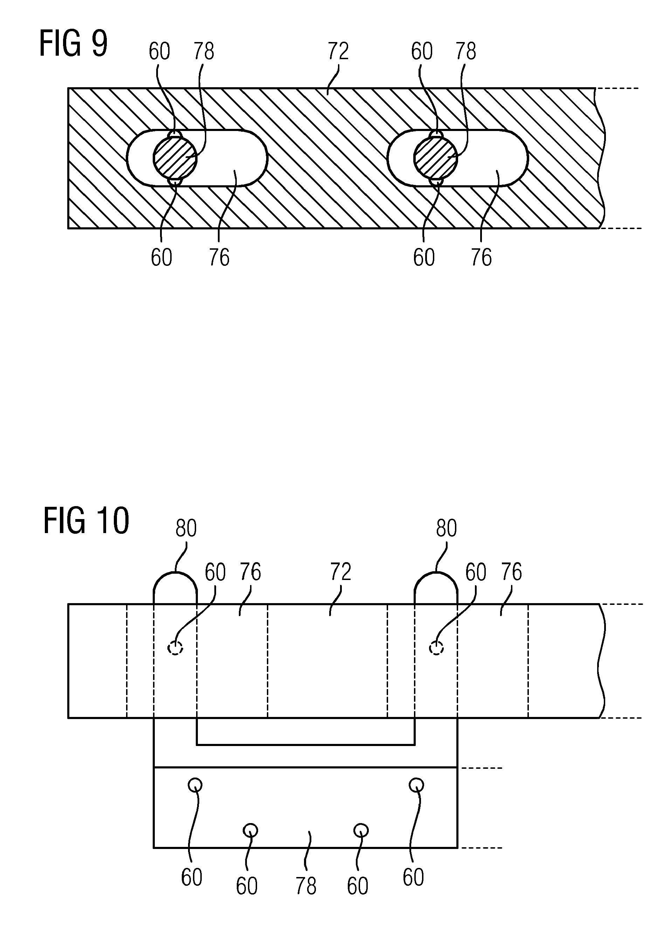

Die axiale Form des Ausführungsbeispiels aus FIG 8 ist in den FIG 9 und 10 gezeigt. FIG 9 zeigt einen Schnitt durch die Dämpfungselemente 72, 78 entlang der Ebene IX-IX in FIG 8, FIG 10 zeigt eine Aufsicht auf die Dämpfungselemente 72, 78 aus Richtung D in FIG 8.

FIG 9 zeigt, dass zwei Öffnungen 76 im Dämpfungselement 72 in axialem Abstand vorgesehen sind. Jede der Öffnungen 76 weist in etwa die Form eines Langlochs auf. Die durch die Öffnungen 76 ragenden Abschnitte des Dämpfungselements 78 sind kreisrund, so dass in axialer Richtung ein Spiel der Dämpfungselemente 72, 78 gegeneinander verbleibt, dennoch aber ein Formschluss (mit Spiel) gewährleistet ist.

FIG 10 verdeutlicht noch einmal die Anordnung der Dämpfungselemente 72, 78 wie bereits erläutert und zeigt die insgesamt vier Punktkontakte 60 in gleichmäßiger, stabilisierender Anordnung auf der Kontaktfläche des Dichtelements 78 zur Reibungsfläche 32.

Alle gezeigten Ausführungsbeispiele zeigen nur zwei Laufschaufeln 2, 4. Die Laufschaufelreihen 1 sind jedoch jeweils n-zählig radiärsymmetrisch ausgestaltet, wobei n die Anzahl der Laufschaufeln 2, 4 pro Laufschaufelreihe ist.

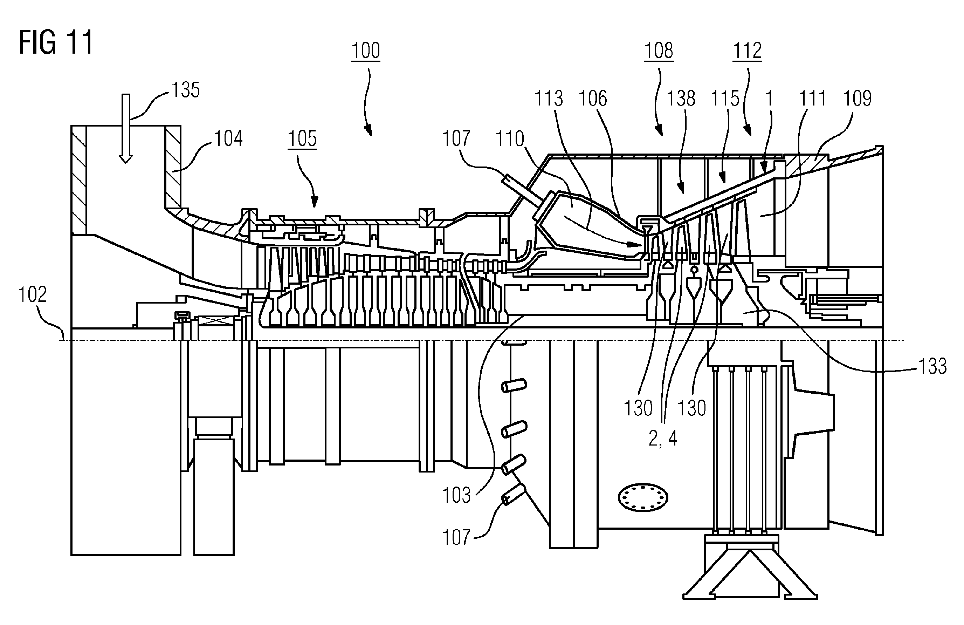

Die FIG 11 zeigt schließlich eine Gasturbine 100 in einem Längsteilschnitt als Beispiel einer Strömungsmaschine, in der die anhand der FIG 1 bis FIG 10 beschriebenen Ausführungsbeispiele von Leitschaufelreihen 1 verbaut sind. In der Gasturbine 100 wird die innere Energie (Enthalpie) eines strömenden Fluids (Flüssigkeit oder Gas) in Rotationsenergie und letztlich in mechanische Antriebsenergie umgewandelt.

Die Gasturbine 100 weist im Inneren einen um eine Rotationsachse 102 (Axialrichtung) drehgelagerten Rotor 103 auf, der auch als Turbinenläufer bezeichnet wird. Entlang des Rotors 103 folgen aufeinander ein Ansauggehäuse 104, ein Verdichter 105, eine torusartige Brennkammer 106 mit mehreren koaxial angeordneten Brennern 107, eine Turbine 108 und das Abgasgehäuse 109.

Die Brennkammer 106 kommuniziert mit einem ringförmigen Heißgaskanal 111. Dort bilden beispielsweise vier hintereinander geschaltete Turbinenstufen 112 die Turbine 108. Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 2, 4 gebildete Laufschaufelreihe 1.

Eine ebensolche Anordnung findet sich analog zur Turbine 108 im Verdichter. Auch hier folgen Laufschaufelreihen 1 auf Leitschaufelreihen 115.

Die Leitschaufeln 130 sind dabei am Stator 143 befestigt, wohingegen die Laufschaufeln 2, 4 einer Laufschaufelreihe 1 mittels einer Turbinenscheibe 133 am Rotor 103 angebracht sind. Die Laufschaufeln 2, 4 bilden somit Bestandteile des Rotors oder Läufers 103. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 2, 4.

Dem Fluidstrom wird durch die möglichst wirbelfreie Umströmung der Turbinenschaufeln 2, 4, 130 ein Teil seiner inneren Energie entzogen, der auf die Laufschaufeln 2, 4 der Turbine 108 übergeht. Über diese wird dann der Rotor 103 in Drehung versetzt, wodurch zunächst der Verdichter 105 angetrieben wird. Die nutzbare Leistung wird an die nicht dargestellte Arbeitsmaschine abgegeben.

Durch die beschriebene Ausgestaltung der Laufschaufelreihen 1 nach einem der Ausführungsbeispiele mit den Dichtelementen 6, 8, 10, 12, 72, 78 können Schwingungen der Laufschaufeln 2, 4 wirkungsvoll vermieden werden. Durch die Flexibilität der Dämpfungsfrequenzen können verschiedene Schwingungsmoden unabhängig voneinander gedämpft werden.

## Patentansprüche

1. Laufschaufelreihe (1) für eine Strömungsmaschine (100), umfassend eine erste Laufschaufel (2) mit einem ersten Laufschaufelfuß (18) und eine zweite Laufschaufel (4) mit einem zweiten Laufschaufelfuß (20),
wobei der erste und der zweite Laufschaufelfuß (18, 20) durch einen Zwischenraum (26) beabstandet sind,
wobei der Zwischenraum (26) einen verbreiterten Bereich (28) aufweist, in dem ein erstes Dämpfungselement (6, 8, 10, 12, 72, 78) und ein zweites Dämpfungselement (6, 8, 10, 12, 72, 78) angeordnet sind,
**dadurch gekennzeichnet, dass**
das erste und das zweite Dämpfungselement (6, 8, 10, 12, 72, 78) für eine unterschiedliche Dämpfungsfrequenz ausgelegt sind.

2. Laufschaufelreihe (1) nach Anspruch 1,
bei der die Dämpfungselemente (6, 8, 10, 12, 72, 78) im Betrieb der Strömungsmaschine (100) jeweils linienartig an einer der beiden Laufschaufeln (2, 4) anliegen.

3. Laufschaufelreihe (1) nach Anspruch 2,
bei der die Dämpfungselemente (6, 8, 10, 12, 72, 78) jeweils eine zylindermantelförmig gekrümmte Oberfläche (36, 38, 40, 74, 80) aufweisen.

4. Laufschaufelreihe (1) nach einem der vorhergehenden Ansprüche,
bei der das erste und das zweite Dämpfungselement (6, 8, 10, 12, 72, 78) eine unterschiedliche Masse haben.

5. Laufschaufelreihe (1) nach einem der vorhergehenden Ansprüche,
bei der das erste und das zweite Dämpfungselement (6, 8, 10, 12, 72, 78) aus einem unterschiedlichen Material bestehen.

6. Laufschaufelreihe (1) nach einem der vorhergehenden Ansprüche,
bei der die Dämpfungselemente (6, 8, 10, 12, 72, 78) im Betrieb der Strömungsmaschine (100) jeweils flächenartig an einer der beiden Laufschaufeln (2, 4) anliegen und die Kontaktfläche des ersten Dämpfungselements (6, 8, 10, 12, 72, 78) und die Kontaktfläche des zweiten Dämpfungselements (6, 8, 10, 12, 72, 78) unterschiedlich sind.

7. Laufschaufelreihe (1) nach einem der vorhergehenden Ansprüche,
bei dem sich das jeweilige Dämpfungselement (6, 8, 10, 12, 72, 78) über die gesamte axiale Länge der Laufschaufelfüße (18, 20) erstreckt.

8. Laufschaufelreihe (1) nach einem der vorhergehenden Ansprüche,
bei der das erste Dämpfungselement (6) vom zweiten Dämpfungselement (8) mechanisch entkoppelt ist.

9. Laufschaufelreihe (1) nach einem der vorhergehenden Ansprüche,
bei der der verbreiterte Bereich (28) derart dimensioniert ist, dass die Dämpfungselemente (6, 8, 10, 12, 72, 78) formschlüssig mit einem definierten Spiel in radialer und/oder azimutaler Richtung in ihrer Position gehalten werden.

10. Laufschaufelreihe (1) nach einem der vorhergehenden Ansprüche,
bei der der verbreiterte Bereich (28) in radialer Richtung zweistufig ausgebildet ist und das erste und das zweite Dämpfungselement (6, 8, 10, 12, 72, 78) in unterschiedlichen Stufen (62, 66) angeordnet sind.

11. Laufschaufelreihe (1) nach einem der vorhergehenden Ansprüche,
bei der in dem verbreiterten Bereich (28) mehr als zwei Dämpfungselemente (6, 8, 10, 12, 72, 78) angeordnet sind, die im Betrieb der Strömungsmaschine (100) jeweils linienartig an einer der beiden Laufschaufeln (2, 4) anliegen.

12. Laufschaufelreihe (1) nach Anspruch 11,
bei der alle bis auf eines der Dämpfungselemente (6, 8, 10, 12, 72, 78) an derselben Laufschaufel (2, 4) linienartig anliegen.

13. Laufschaufelreihe (1) nach einem der vorhergehenden Ansprüche,
bei der die Dämpfungselemente (6, 8, 10, 12, 72, 78) durch Formschluss gegen ein Verschieben gegeneinander fixiert sind.

14. Laufschaufelreihe (1) nach Anspruch 13,
bei der das erste Dämpfungselement (6, 8, 10, 12, 72, 78) eine Vertiefung (48, 50, 52) aufweist, in der eine Erhebung (54, 56, 58) des zweiten Dämpfungselements (6, 8, 10, 12, 72, 78) angeordnet ist.

15. Laufschaufelreihe (1) nach Anspruch 13 oder 14,
bei der sich das erste Dämpfungselement (78) durch eine Öffnung (76) des zweiten Dämpfungselements (72) hindurch erstreckt.

16. Laufschaufelreihe (1) nach einem der vorhergehenden Ansprüche,
bei der ein Dämpfungselement (6, 8, 10, 12, 72, 78) Punktkontakte (60) an einer Kontaktfläche zu einem anderen Dämpfungselement (6, 8, 10, 12, 72, 78) oder zu einem Laufschaufelfuß (2, 4) aufweist.

17. Laufschaufelreihe (1) nach einem der vorhergehenden Ansprüche,
die radiärsymmetrisch ausgebildet ist.

18. Strömungsmaschine (100) mit einer Laufschaufelreihe (1) nach einem der vorhergehenden Ansprüche.

19. Strömungsmaschine (100) nach Anspruch 18,
die als Gasturbine (100) ausgelegt ist.
